# EUROPEAN PATENT APPLICATION

(11) **EP 2 980 623 A1**
(43) Date of publication of application: **03.02.2016**
(21) Application number: 14775731.4
(22) Date of filing: 27.01.2014
(51) Int. Cl.: G02B 7/04, H04N 5/225

(54) **ELECTROMAGNETIC ACTUATOR**

(30) Priority: 29.03.2013 JP 2013072353
(71) Applicant: Olympus Corporation, Shibuya-ku Tokyo 151-0072 (JP)
(72) Inventor: MORISHIMA Tetsuya, Tokyo 151-0072 (JP)
(74) Representative: Winter, Brandl, Fürniss, Hübner, Röss, Kaiser, Polte - Partnerschaft mbB
(86) International application number: PCT/JP2014/051664
(87) International publication number: WO 2014/156267

(57) **Abstract**

An electromagnetic actuator includes an optical element L which is movable with respect to an optical axial direction, an optical-element holding portion which holds the optical element, a coil which is installed to enclose the optical element L and the optical-element holding portion, a coil holding portion which holds the coil, and a magnetic flux generator which generates a magnetic flux in a radial direction, and the optical element L is disposed at an inner side of the magnetic flux generator.

## Description

### Technical Field

The present invention related to an electromagnetic actuator

### Background Art

An actuator which moves a coil by using Lorentz force that acts on the coil by allowing an electric current to flow in the coil in a magnetic field typified by a VCM (voice coil motor) has generally been known. Moreover, an actuator which moves a lens by using a reaction on a magnet with respect to the Lorentz force acting on the coil when the electric current is let to flow through a coil in an electric field is also available. Such electromagnetic actuator is disclosed in patent document 1.

### Citation List

### Patent Literature

Patent Document 1: Japanese Patent Application Laid-open Publication No. 2012-242499

### Summary of Invention

### Technical Problem

However, in the actuator disclosed in the abovementioned publication, a plurality of coils is required to move the magnet in an optical axial direction. Therefore, the number of components becomes large. Consequently, there is an increase in the number of assembling processes, and it is not easy to make it small-sized and light-weight.

The present invention has been made in view of the abovementioned problem, and an object of the present invention is to provide an electromagnetic actuator that can be assembled easily, and that has been made small-sized and light-weight.

### Solution to Problem

An electromagnetic actuator of the present invention includes an optical element that is movable with respect to an optical axial direction, an optical-element holding portion that holds the optical element, a coil that is installed to enclose the optical element and the optical-element holding portion, a coil holding portion that holds the coil, and a magnetic flux generator that generates a magnetic flux in a radial direction, and the optical element is disposed at an inner side of the magnetic flux generator.

### Advantageous Effects of Invention

The present invention shows an effect that it is possible to provide an electromagnetic actuator that can be assembled easily, and that has been made small-sized and light-weight.

### Brief Description of Drawings

Fig. 1A is a cross-sectional view perpendicular to an optical axis of an electromagnetic actuator according a first embodiment of the present invention, and Fig. 1B is a cross-sectional view in a direction along an optical axis;
Fig. 2A is a diagram explaining forces acting on a cross-section perpendicular to the optical axis of the electromagnetic actuator according to the first embodiment, and Fig. 2B is a diagram explaining an action on a cross-section in the direction along the optical axis;
Fig. 3A is a cross-sectional view perpendicular to an optical axis of an electromagnetic actuator according to a second embodiment of the present invention, and Fig. 3B is a cross-sectional view in a direction along the optical axis;
Fig. 4A is a cross-sectional view perpendicular to an optical axis of an electromagnetic actuator according to a third embodiment of the present invention, and Fig. 4B is a cross-sectional view in a direction along the optical axis;
Fig. 5 is a cross-sectional view perpendicular to an optical axis of an electromagnetic actuator according to a fourth embodiment; and
Fig. 6A is a cross-sectional view perpendicular to an optical axis of an electromagnetic actuator according to a fifth embodiment of the present invention, and Fig. 6B is a cross-sectional view along a direction along the optical axis.

### Description of Embodiments

Exemplary embodiments of an electromagnetic actuator according to the present invention will be described below in detail by referring to the accompanying diagrams. However, the present invention is not restricted to the embodiments described below.

### (First embodiment)

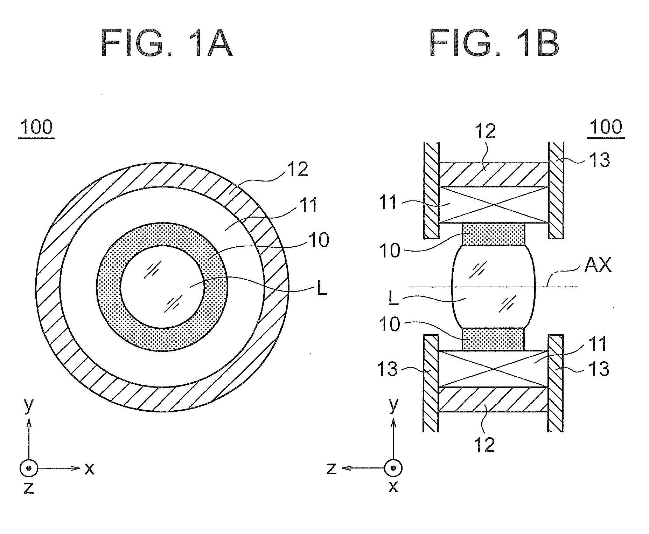

Fig. 1A is a cross-sectional view perpendicular to an optical axis of an electromagnetic actuator 100 of a first embodiment, and Fig. 1B is a cross-sectional view in a direction along the optical axis.

In the electromagnetic actuator 100, an optical element L is disposed to be movable with respect to an optical axial direction AX. An optical-element holding portion 10 holds the optical element L. A coil 11 is installed to be fixed to enclose the optical element L and the optical-element holding portion 10.

Examples of the optical element L are mainly, a lens, a stop, a filter, an image pickup element, a prism, and a mirror. A case in which, a lens has been used as the optical element L is described below.

A coil holding portion 12 holds the coil 11. Moreover, a magnetic flux generator generates a magnetic flux in a radial direction. The optical element L is disposed at an inner side of the magnetic flux generator.

Accordingly, it is possible to reduce the number of coils 11 as compared to the number of coils hitherto been used. As a result of this, it is possible to provide an electromagnetic actuator that can be assembled easily, and that has been small-sized and light-weight.

It is desirable that at least one of the optical-element holding portion 10 and the coil holding portion 12 serves also a function of the magnetic flux generator. Accordingly, it is possible to communize the magnetic flux generator and the optical-element holding portion 10 and / or the coil holding portion 12. As a result, it is possible to reduce the number of components.

For instance, by letting the optical-element holding portion 10 serve also the function also of the magnetic flux generator, characteristic feature of magnetic flux generation is improved.

Furthermore, by letting both of the optical-element holding portion 10 and the coil holding portion 12 serve also the function of the magnetic flux generator, the characteristic feature of magnetic flux generation is improved.

By letting the coil holding portion 12 serve also the function of the magnetic flux generator, assembling and manufacturing of the electromagnetic actuator become easy.

Next, the electromagnetic actuator 100 will be described below in further detail.

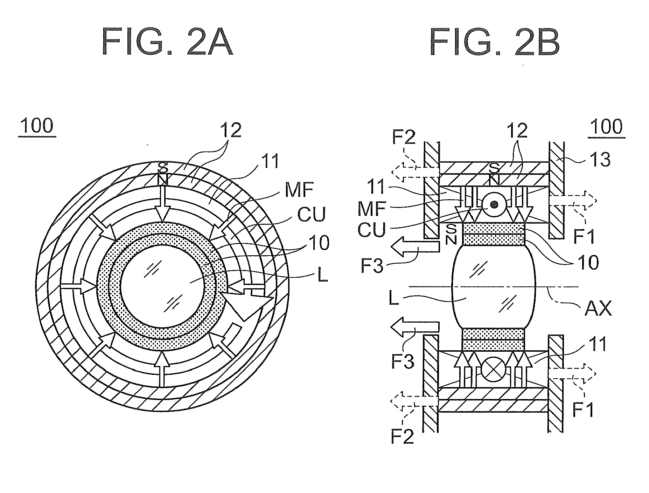

Fig. 2A is a diagram explaining forces acting on a cross-section perpendicular to the optical axis of the electromagnetic actuator of the first embodiment, and Fig. 2B is a diagram explaining an action on a cross-section in the direction along the optical axis.

In Fig. 1A and Fig. 1B, the optical-element holding portion 10 (lens holding portion) is a permanent magnet. Moreover, the coil holding portion 12 is a magnetic body.

In Fig. 2A and Fig. 2B, the optical-element holding portion 10 (lens holding portion) is a permanent magnet. Moreover, the coil holding portion 12 is also a permanent magnet.

A magnetic flux MF, an electric current CU, a force F3 applied to the optical-element holding portion 10 (lens holding portion), a force F2 applied to the coil holding portion 12, and a force F1 applied to the coil are shown in Fig. 2A and Fig. 2B.

An operating principle of the electromagnetic actuator 100, and Fig. 2A and Fig. 2B will be described below.

The electromagnetic actuator 100 has a rotationally symmetrical arrangement with the optical axis AX as a center. Therefore, the description will be made by using an upper half above the optical axis AX in Fig. 2B.

A magnetic field generates the magnetic flux MF directed downward from the coil holding portion 12 (N pole) toward the optical-element holding portion 10 (lens holding portion (S pole)). The electric current CU flows frontward from an inward side of the paper surface. Here, directions in which the forces will be applied are to be considered using Fleming's left hand rule.

The coil 11 generates the force F1 toward a rightward direction of a paper surface. The coil holding portion 12 and the optical-element holding portion 10 generate the forces F1 and F3 toward a leftward direction of the paper surface.

Here, the coil 11 and the coil holding portion 12 are fixed by a fixing portion 13. Therefore, the coil 11 and the coil holding portion 12 do not move. Consequently, the optical-element holding portion 10 and the optical element L move in the leftward direction of the paper surface.

Next, in Fig. 2B, an arrangement of a lower half with the optical AX as a center is to be taken into consideration. Here, the direction of the magnetic flux MF changes to be upward of the paper surface. The electric current CU changes to be directed inward from the frontward of the paper surface. By the directions of the magnetic flux MF and the electric current CU being changed, the directions of the forces F1, F2, and F3 become directions similar to the arrangement of the upper half above the optical axis AX.

Moreover, as the direction of the electric current CU flowing through the coil 11 is reversed, the optical-element holding portion 10 and the optical element L move rightward of the paper surface.

At least one of the coil 11 and the coil holding portion 12 is in contact with the fixing portion 13. Accordingly, the coil 11 is installed to be fixed to enclose the optical element L and the optical-element holding portion 10.

If the coil 11 and the coil holding portion 12 are not fixed, there is a possibility that the coil side might move. Therefore, it is absolutely necessary to fix the coil 11. Accordingly, as in the present embodiment, an arrangement is made by fixing the coil holding portion 12 to the fixing portion 13 and by fixing the coil 11 to the coil holding portion 12. As a result, the movement of the coil 11 is prevented.

Here, it is desirable that at least one of the optical-element holding portion 10 and the coil holding portion 12 includes a magnetic material. By using a magnetic material, it is possible to form an arbitrary magnetic path. Moreover, for a permanent magnet, the magnetic flux differs at an end portion and a central portion. Therefore, a magnetic material for one leads to an even force. Furthermore, machining of a magnetic material is easier than machining of a permanent magnet, and magnetic material is ideal for small-sizing of the electromagnetic actuator.

It is desirable that the coil 11 is longer than the optical-element holding portion 10 in the optical axial direction AX. When the coil 11 is shorter than the optical-element holding portion 10 in the optical axial direction AX, force generated becomes weak. Moreover, when the coil 11 is long in the optical axial direction AX, the coil 11 becomes a guide for a moving member such as a lens and a lens holding portion. Making the coil 11 short however has no merit in particular.

Moreover, it is desirable that the coil holding portion 12 is longer than the optical-element holding portion 10 in the optical axial direction AX. When the coil holding portion 12 is shorter than the optical-element holding portion 10 in the optical axial direction AX, the force generated becomes weak. Furthermore, when there is an end portion in a stroke, the flow of the magnetic flux changes according to a position of the optical-element holding portion 10, and becomes uneven.

### (Second embodiment)

Next, an electromagnetic actuator 200 of a second embodiment will be described below. Same reference numerals are used for components that are same as in the first embodiment, and repetitive description thereof is omitted.

It is desirable that the magnetic flux generator is a permanent magnet. As the magnetic flux generator, permanent magnet is ideal. Moreover, as it will be described later, there are numerous variations of shapes, number, and arrangements of permanent magnets.

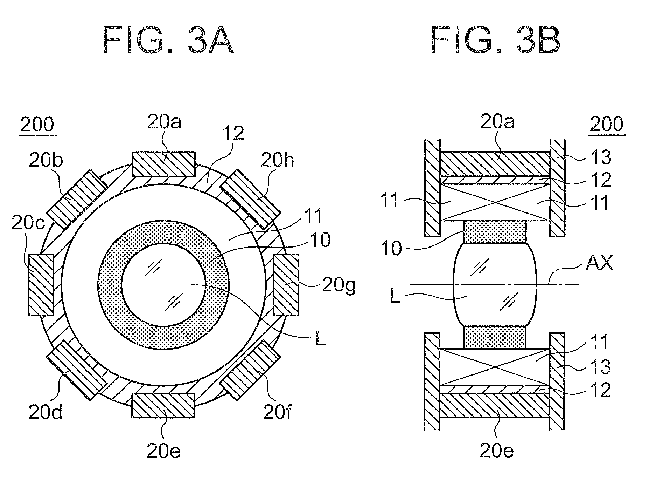

Moreover, it is desirable that a plurality of permanent magnets is disposed. For instance, as shown in Fig. 3A, permanent magnets 20a, 20b, 20c, 20d, 20e, 20f, 20g, and 20h are disposed discretely at equal intervals on an annular shape.

As compared to a case of preparing a radial anisotropic magnet by one magnet, it is easy to prepare by assembling a plurality of magnets in the form of a plate and a tile. It is possible to prepare magnets in the form of a plate and a tile easily. Therefore, in the present embodiment, the plurality of permanent magnets is disposed. Variations in shapes and arrangements will be described later.

According to the present embodiment, since it is possible to set the number of permanent magnets, it is possible to set an arbitrary magnetic flux.

For instance, as shown in Fig. 3A, it is desirable that a plurality of permanent magnets 12 has an arrangement in which, a plurality of rectangular parallelepiped permanent magnets 20a, 20b, 20c, 20d, 20e, 20f, and 20g is disposed.

Moreover, as the plurality of permanent magnets, a plurality of tile-shaped permanent magnets may be disposed.

Furthermore, as the plurality of permanent magnets, a plurality of curve-shaped permanent magnets may be disposed.

### (Third embodiment)

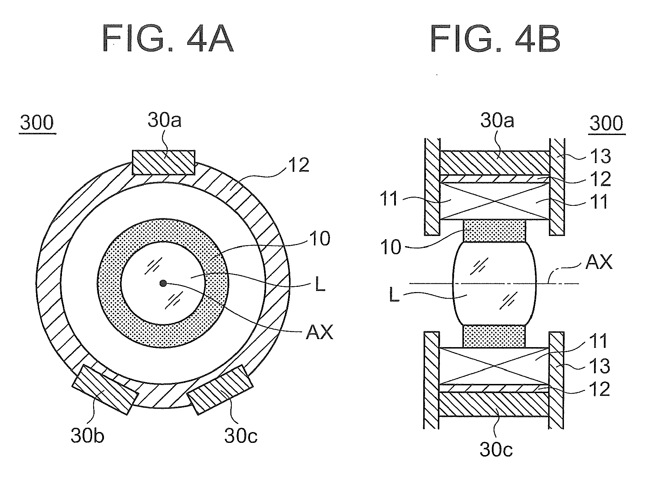

Next, an electromagnetic actuator 300 of a third embodiment of the present invention will be described below. Fig. 4A is a cross-sectional view perpendicular to an optical axis of the electromagnetic actuator of the third embodiment, and Fig. 4B is a cross-sectional view in a direction along the optical axis.

In the present embodiment, as shown in Fig. 4A, a plurality of permanent magnets 30a, 30b, and 30c may be disposed asymmetrically with respect to an optical axis AX. Accordingly, in the present embodiment, the optical-element holding portion 10 is attracted in a downward direction of a paper surface, and more stable holding force is generated.

In a case of an arrangement in which, a plurality of permanent magnets is arranged symmetrically with respect to the optical axis AX, sometimes, the holding force becomes weak. However, in the present embodiment, it is possible to achieve stable holding force all the time.

Furthermore, it is difficult to dispose the plurality of permanent magnets perfectly symmetrically about the optical axis AX. Therefore, as in the present embodiment, by disposing the permanent magnets asymmetrically, assemblability of the electromagnetic actuator 300 is improved.

### (Fourth embodiment)

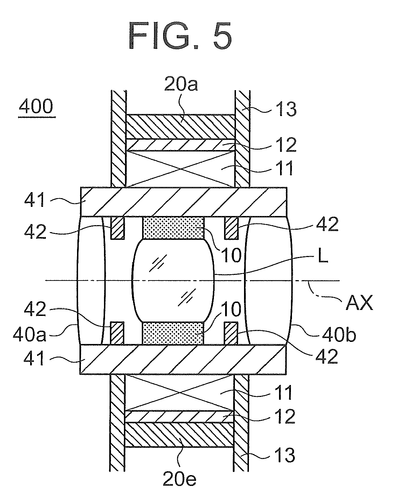

Next, an electromagnetic actuator 400 of a fourth embodiment of the present invention will be described below. Fig. 5 is a cross-sectional view perpendicular to an optical axis of the electromagnetic actuator of the fourth embodiment.

In the present embodiment, an intermediate member 41 is disposed to be interposed between the optical-element holding portion 10 and the coil 11. Accordingly, it is possible to improve seal-tightness.

Moreover, it is desirable that the intermediate member 41 is a nonmagnetic body. Accordingly, the intermediate member 41 does not have an adverse effect on a magnetic circuit.

Furthermore, it is desirable that the intermediate member 41 plays a role of reducing frictional wear of the optical-element holding portion 10 and the coil 10, and protecting mainly the coil 11.

It is desirable that the intermediate member 41 has an arrangement of improving sliding with the optical-element holding portion 10 and reducing a coefficient of friction. Accordingly, the intermediate member 41 is capable of reducing the frictional wear of the optical-element holding portion 10 and the coil 11. Furthermore, it is desirable that the intermediate member 41 plays a role of protecting mainly the coil 11.

Moreover, it is desirable that the intermediate member 41 is parallel with respect to the optical axis AX. Due to the intermediate member 41 being parallel with respect to the optical axis AX, the movement of the optical element L is not hindered.

It is desirable that the intermediate member 41 has a circular cylindrical shape. Due to the intermediate member 41 being circular cylindrical-shaped, the movement of the optical element L is not hindered.

It is desirable that the intermediate member 41 seals the optical element L tight. As shown in Fig. 5, it is possible to seal a lens tight by using other member such as sealing members 40a and 40b. Here, to seal tight means to make watertight, and particularly to make airtight.

Moreover, in the present embodiment, a restraining portion 42 is formed on the intermediate member 41. When the optical element L has moved in a leftward-rightward direction of a paper surface, the optical-element holding portion 10 abuts with the restraining portion 42 and stops. The restraining portion 42 functions as an abutting portion. Therefore, it is possible to determine accurately a range of movement of the optical element L, or in other words, to regulate the amount of movement of the optical element L. Moreover, instead of providing the restraining portion 42, an arrangement may be such that, an end portion of the optical-element holding portion 10 is extended in the leftward-rightward direction of the paper surface. Even with such arrangement, by abutting of the optical-element holding portion 10 with the other members 40a and 40b, it is possible to regulate the amount of movement of the optical element L.

### (Fifth embodiment)

Next, an electromagnetic actuator 500 of a fifth embodiment of the present invention will be described below. In the present embodiment, permanent magnets 40a, 40b, 40c, 40d, 40e, and 40f may be disposed at equal intervals around the optical-element holding portion 10. As a matter of course, the permanent magnets may be disposed at unequal intervals.

The following four arrangements can be cited as variations of the optical-element holding portion 10.
(I) An arrangement with a single magnet
(II) An arrangement in which, a plurality of magnets is included in the optical-element holding portion 10 which is a nonmagnetic body.
(III) An arrangement in which, a plurality of magnets is included in the optical-element holding portion 10 which is a magnetic body.
(IV) An arrangement with a plurality of magnets.

For an arrangement of the coil-holding portion 12 also, there are four variations similarly as for the optical-element holding portion 10. Moreover, the number of embodiments may be let to be the same as the number of these combinations. Here, an example in which, both the optical-element holding portion 10 and the coil holding portion 12 are formed by a magnetic body is to be excluded.

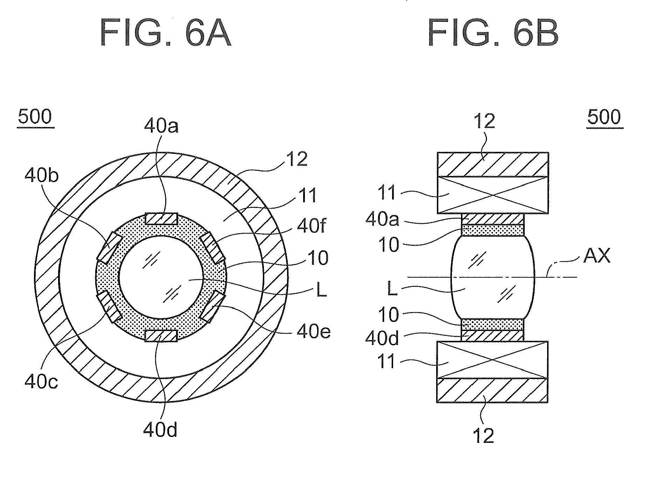

An example of the combination is shown in Fig. 6A and Fig. 6B.

It is a combination of the arrangement (II) in which, the plurality of magnets is included in the optical-element holding portion 10, and an arrangement in which, the coil-holding portion 12 is formed by a magnetic body.

As aforementioned, not all the combinations are shown in diagrams and it may be any arrangement of a combination of a variation of the optical-element holding portion 10 and a variation of the coil holding portion 12.

The present invention is not restricted to the embodiments of the invention described above, and as a matter of course, various modifications may be made without departing from the scope of the present invention.

### Industrial Applicability

As described above, the electromagnetic actuator according to the present invention can be assembled easily, and is suitable for an electromagnetic actuator which is small-sized and light-weight.

### Reference Signs List

- 100: electromagnetic actuator
- 10: optical-element holding portion
- L: optical element
- 11: coil
- 12: coil holding portion
- 13: fixing portion
- AX: optical axis

## Claims

1. An electromagnetic actuator comprising:
an optical element which is movable with respect to an optical axial direction;
an optical-element holding portion which holds the optical element;
a coil which is installed to enclose the optical element and the optical-element holding portion;
a coil holding portion which holds the coil; and
a magnetic flux generator which generates a magnetic flux in a radial direction, wherein
the optical element is disposed at an inner side of the magnetic flux generator.

2. The electromagnetic actuator according to claim 1, wherein at least one of the optical-element holding portion and the coil holding portion serves also a function of the magnetic flux generator.

3. The electromagnetic actuator according to one of claims 1 and 2, wherein the magnetic flux generator is a permanent magnet.

4. The electromagnetic actuator according to claim 3, wherein the magnetic flux generator has a plurality of permanent magnets disposed therein.

5. The electromagnetic actuator according to claim 4, wherein the plurality of permanent magnets is disposed asymmetrically with respect to an optical axis.

6. The electromagnetic actuator according to one of claims 1 to 5, wherein the coil is longer than the optical-element holding portion in an optical axial direction.

7. The electromagnetic actuator according to one of claims 1 to 6, wherein the coil holding portion is longer than the optical-element holding portion in the optical axial direction.

8. The electromagnetic actuator according to one of claims 1 to 7, wherein a fixing portion has a restraining portion which regulates an amount of movement of at least one of the optical element and the optical-element holding portion.

9. The electromagnetic actuator according to one of claims 4 and 5, wherein the permanent magnet is rectangular parallelepiped.

10. The electromagnetic actuator according to one of claims 4 and 5, wherein the permanent magnet is tile-shaped.

11. The electromagnetic actuator according to claim 3, wherein the permanent magnet is curve-shaped.

12. The electromagnetic actuator according to one of claims 1 to 11, wherein an intermediate member is interposed between the optical-element holding portion and the coil.

13. The electromagnetic actuator according to claim 12, wherein the intermediate member is a nonmagnetic body.

14. The electromagnetic actuator according to one of claims 12 and 13, wherein the intermediate member improves sliding with the optical-element holding portion, and reduces a coefficient of friction.

15. The electromagnetic actuator according to one of claims 12 to 14, wherein the intermediate member is parallel with respect to the optical axis.

16. The electromagnetic actuator according to one of claims 11 to 15, wherein the intermediate member has a circular cylindrical shape.

17. The electromagnetic actuator according to one of claims 12 to 16, wherein the intermediate member seals the optical element tight.

18. The electromagnetic actuator according to one of claims 1 to 17, wherein at least one of the optical-element holding portion and the coil holding portion includes a magnetic material.
